# EUROPÄISCHE PATENTSCHRIFT

(11) **EP 2 545 750 B1**
(45) Veröffentlichungstag und Bekanntmachung des Hinweises auf die Patenterteilung: **10.05.2017**
(21) Anmeldenummer: 11707849.3
(22) Anmeldetag: 10.03.2011
(51) Int. Cl.: H05B 37/02, H04L 12/42, H04L 12/40

(54) **LEUCHTMITTEL-BETRIEBSGERÄTESYSTEM MIT VERÄNDERBARER BUSTOPOLOGIE**
LIGHT OPERATING DEVICE SYSTEM HAVING VARIABLE BUS TOPOLOGY
SYSTÈME DE MATÉRIEL D'ÉCLAIRAGE À TOPOLOGIE DE BUS MODULABLE

(30) Priorität: 11.03.2010 DE 102010002756
(43) Veröffentlichungstag der Anmeldung: 16.01.2013
(73) Patentinhaber: Tridonic GmbH & Co KG, 6851 Dornbirn (AT)
(72) Erfinder: JUEN, Reinhold, 6850 Dornbirn (AT)
(74) Vertreter: Rupp, Christian
(86) Internationale Anmeldenummer: PCT/EP2011/053622
(87) Internationale Veröffentlichungsnummer: WO 2011/110632

(56) Entgegenhaltungen:
- EP-A1- 1 320 222
- EP-A2- 0 594 198
- WO-A1-2009/040014
- US-A1- 2004 160 199
- US-A1- 2009 051 506
- US-B1- 6 421 710

## Beschreibung

Die vorliegende Erfindung bezieht sich allgemein auf ein System mit mehreren Betriebsgeräten, und insbesondere auf ein Gebäudetechnik-System aufweisend mehrere Betriebsgeräte der Gebäudetechnik bzw. auf ein Beleuchtungssystem mit verschiedenen Betriebsgeräten für Leuchtmitteln.

Im Bereich der Gebäude- bzw. Beleuchtungstechnik werden üblicherweise Betriebsgeräte untereinander verbunden und verkabelt, um beispielsweise eine zentrale Steuerung oder Regelung der einzelnen Geräte durchzuführen. Ein typisches digitales Lichtsteuersystem wird nach der Bus-Topologie aufgebaut. Alle Teilnehmer bzw. alle Betriebsgeräte sind direkt mit einem Bus verbunden. Diese Topologie wird beispielsweise bei digitalen Steuerprotokollen, wie bei dem für Beleuchtungsanlagen ausgelegten DALI (Digital Addressable Lighting Interface) Protokoll, benutzt.

Bei der Bus-Topologie weist jeder Teilnehmer eine individuelle Adresse auf bzw. es wird jedem Teilnehmer eine Adresse zugewiesen. Ein besonderes Merkmal dieser Topologie ist es weiterhin, dass alle Teilnehmer alle auf dem Bus gesendeten Nachrichten mitlesen können. Jede Nachricht enthält dabei üblicherweise eine Adressinformation, und nur jene Teilnehmer, deren Adresse mit jener des Headers der Nachricht übereinstimmt, verarbeitet auch die Nachricht. Deshalb ist es bei der Inbetriebnahme eines derartigen Lichtsteuersystems notwendig, logische Kanäle zu definieren; d.h. es muss konfiguriert werden, welche Teilnehmer Nachrichten austauschen sollen.

Damit auf gesendete Befehle auch die gewünschten Lichtquellen reagieren, ist es notwendig, die örtliche Verteilung der Teilnehmer zu kennen. Diese örtliche Bestimmung der Teilnehmer stellt bei der Inbetriebnahme einer Lichtsteueranlage einen nicht unwesentlichen Zeit- und Kostenaufwand dar. Prinzipiell gibt es zur Inbetriebnahme eines Beleuchtungssystems zwei Verfahren. Beim ersten Verfahren werden die Teilnehmer vorab adressiert, und anschließend an der geplanten Stelle im Raum bzw. Gebäude montiert. Beim zweiten Verfahren werden die Teilnehmer nach der Montage adressiert, und anschließend örtlich lokalisiert und zugeordnet.

Wie in Fig. 1 ersichtlich ist es aus der WO2009/040014A1 als Stand der Technik bereits bekannt, die Betriebsgeräte 1, 2, 3 über einen an ein Steuergerät 6 angeschlossenen Bus 4 sowie zusätzlich dazu über eine zusätzliche ringförmige Struktur 5 zu verbinden. Die ringförmige Struktur 5 ist derart ausgestaltet, dass jedes Betriebsgerät 2 einen Empfänger 7 und einen Sender 8 aufweist. Dabei werden die Daten vom vorausgehenden Betriebsgerät 1 empfangen, und zum nachfolgenden Betriebsgerät 3 gesendet. Jedes Betriebsgerät 1 verfügt über zwei Anschlüsse 9, 10 zum Anschließen an den Bus 4.

Ein positiver Effekt der von diesem Stand der Technik vorgeschlagenen zusätzlichen ringförmigen Struktur ist, dass das Konfigurieren der Busstruktur vereinfacht werden kann. Allerdings ist es nachteilig, dass eben eine zusätzliche Struktur im System vorhanden sein muss.

Es ist deshalb Aufgabe der vorliegenden Erfindung, eine Bus-Topologie und eine Teilnehmer-Struktur vorzuschlagen, welche die oben genannten Nachteile beheben. Der vorliegenden Erfindung liegt insbesondere nunmehr die Aufgabe zugrunde, eine alternative bzw. bessere Topologie anzugeben, die eine Vereinfachung des Konfigurationsprozesses ermöglicht.

Die Aufgabe der vorliegenden Erfindung wird durch den Gegenstand der unabhängigen Ansprüche gelöst. Vorteilhafte Weiterbildungen der Erfindung sind Gegenstand der Unteransprüche.

Ein erster Aspekt der Erfindung betrifft eine Schnittstelle (19) für einen Bus-Teilnehmer (13) eines Beleuchtungssystems (21, 30), aufweisend einen ersten Anschluss (16), einen zweiten Anschluss (17), und einen zwischen den ersten Anschluss (16) und den zweiten Anschluss (17) eingeschalteten Schalter (18),
wobei die Schnittstelle dazu ausgelegt ist, selektiv eine Bus-Verdrahtung (12) zur Schaffung einer Ringtopologie zu unterbrechen oder zur Schaffung einer Bustopologie durchzuschleifen.

Die Schnittstelle kann einen Schalter (18) aufweisen, der derart ausgelegt ist, dass eine durch den ersten Anschluss (16) und den zweiten Anschluss (17) durchgeschleifte Bus-Verdrahtung (12) des Gebäudetechnik-Systems durch Ansteuerung des Schalters (18) selektiv unterbrochen oder geschlossen werden kann.

Die Schnittstelle kann einen dritten Anschluss (15) zum Verbinden mit einer weiteren Verdrahtung (11) des Beleuchtungssystems über einen Abgriff (23) aufweisen.

Die Schnittstelle kann einen Sendezweig und einen Empfangszweig zum Senden bzw. Empfangen von Daten über die Bus-Verdrahtung(en) (11, 12) aufweisen.

Bei geöffnetem Schalter (18) können der Sendezweig und der Empfangszweig jeweils entweder nur mit dem ersten Anschluss (16) oder mit dem zweiten Anschluss (17) verbunden sein.

Bei geöffnetem Schalter (18) können der Sendezweig mit dem ersten Anschluss (16) bzw. mit dem zweiten Anschluss (17) und der Empfangszweig mit dem zweiten Anschluss (17) bzw. mit dem ersten Anschluss (16) verbunden sein.

Die Erfindung bezieht sich auch auf ein busfähiges Betriebsgerät für Leuchtmittel (14) aufweisend eine Schnittstelle (19) der oben erläuterten Art.

Das Betriebsgerät kann eine Steuereinheit (20) zum Steuern bzw. Öffnen oder Schließen des Schalters (18) aufweisen.

Die Steuereinheit (20) des Betriebsgeräts kann dabei dazu ausgelegt sein, über die Bus-Verdrahtung(en) (11, 12) einen Befehl zum Öffnen oder Schließen des Schalters zu erhalten, und den Schalter (11, 12) entsprechend anzusteuern.

Die Erfindung betrifft weiterhin ein Beleuchtungssystem, aufweisend mehrere Teilnehmer in Form von Betriebsgeräten für Leuchtmittel, wobei die Teilnehmer untereinander und/oder mit einer Zentraleinheit über eine Busleitung verbunden sind, wobei die Topologie der Busleitung umschaltbar ist, so dass die Topologie der Busleitung wahlweise eine Ringtopologie oder eine Bustopologie ist.

Das System kann eine Zentraleinheit (31) aufweisen, die dazu ausgelegt ist, über die Verdrahtung (11, 12) den Teilnehmern (13) Daten, insbesondere Befehle zum Ansteuern des Schalters (18), zu übersenden.

Schliesslich betrifft die Erfindung auch ein Verfahren zur Vergabe einer Busadresse in einem Bus-Beleuchtungssystems (21, 30) mit mehreren Teilnehmern in Form von Betriebsgeräten für Leuchtmittel, wobei zur Adressvergabe die folgenden Schritte durchgeführt werden:
a.) Anordnen des Busses in einer Ringtopologie,
b.) Vergabe einer Adresse an einen ersten Teilnehmer,
c.) Weiterschleifen der Busleitung durch den ersten Teilnehmer,
d.) Vergabe einer Adresse an den auf den ersten Teilnehmer folgenden Adresse.

Die Schritte b.) bis d.) können dabei mit fortschreitenden Teilnehmern wiederholt ausgeführt werden, bis ein Abbruchkriterium erreicht ist, insbesondere bis durch das fortschreitende Durchschleifen der Busleitung die gesamte Topologie der Busleitung in eine Bustopologie transferiert wurde.

Nach Abschluss der Adressvergabe kann das Beleuchtungssystem dann mit der als Bustopologie konfigurierten Busleitung betrieben werden.

Ein grundlegender Unterschied zwischen der Erfindung und dem aus der WO2009/040014A1 bekannten Stand der Technik besteht darin, dass der Stand der Technik zwei unterschiedliche Verdrahtungen, nämliche eine für die Bus-Topologie und eine für die Ring-Topologie verwendet. Es fehlt an dem Gedanken die selektive Umschaltung von der Bus-Topologie als Normalzustand bei Öffnen eines Schalters auf die Ring-Topologie für selektierte Anwendungsfälle. Bei der Erfindung erfolgt die Adressvergabe auch nicht bei Vorlegen einer vollständigen Ring-Topologie, vielmehr wird ausgegangen von einer Ring-Topologie als Ansprechpartner für eine Zentrale, wobei dann sukzessive jeder Busteilnehmer, der eine Adresse zugewiesen hat, und der Ring-Topologie bei geöffnetem Schalter auf die Bus-Topologie bei geschlossenem Schalter umschaltet, um somit dem nächsten Teilnehmer eine Adressvergabe zu ermöglichen. Im Zuge der Adressvergabe erfolgt also eine sukzessive Umschaltung von Teilnehmern ausgehend von der Ring-Topologie auf die Bus-Topologie. Der Wartungsaufwand ist auch wesentlich niedriger als beim Stand der Technik.

Im Folgenden wird der Erfindungsgegenstand anhand von bevorzugten Ausführungsbeispielen, welche in den beiliegenden Zeichnungen dargestellt sind, näher erläutert.

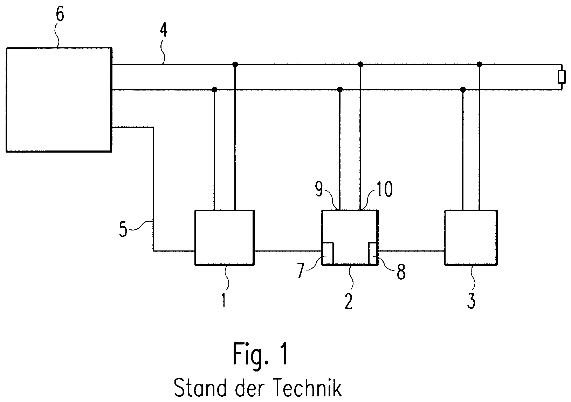

Fig. 1 zeigt eine schematische Darstellung eines Kommunikationssystems für ein Steuergerät und mehrere Betriebsgeräte für Leuchtmittel gemäß dem Stand der Technik.
Fig. 2 zeigt eine schematische Darstellung eines an ein Kommunikationsbus angeschlossenen Betriebsgeräts für Leuchtmittel gemäß der vorliegenden Erfindung.
Fig. 3 zeigt ein erfindungsgemäßes Lichtsteuersystem nach der Installation der Betriebsgeräte.
Fig. 4 zeigt das Lichtsteuersystem im Adressierungsmodus nach dem Umschalten auf die Ring-Topologie.
Fig. 5 zeigt das Lichtsteuersystem im Adressierungsmodus, nachdem erste Busteilnehmer eine Adresse erhalten haben.
Fig. 6 zeigt das Adressieren des ersten verbliebenen Teilnehmers des Lichtsteuersystems.
Fig. 7 zeigt einen weiteren Zustand des Lichtsteuersystems im Adressierungsmodus.
Fig. 8 zeigt das Lichtsteuersystem zum Abschluss des Adressierungsmodus.

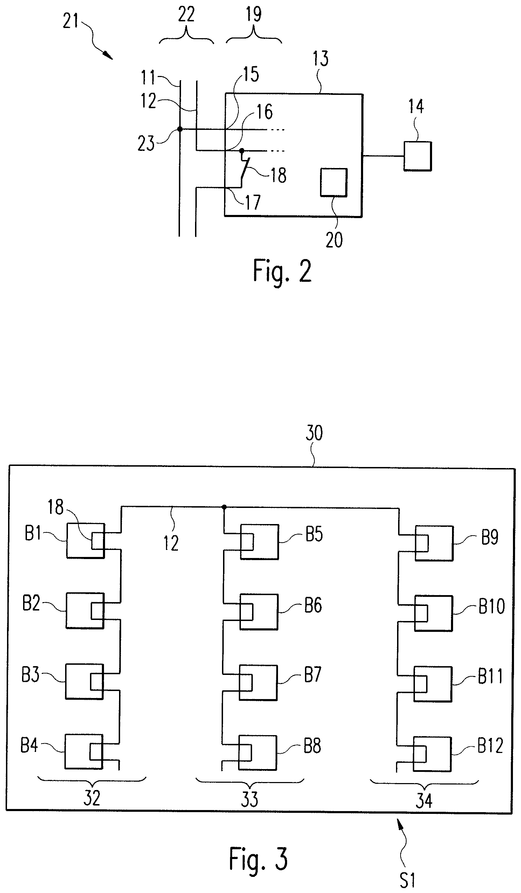

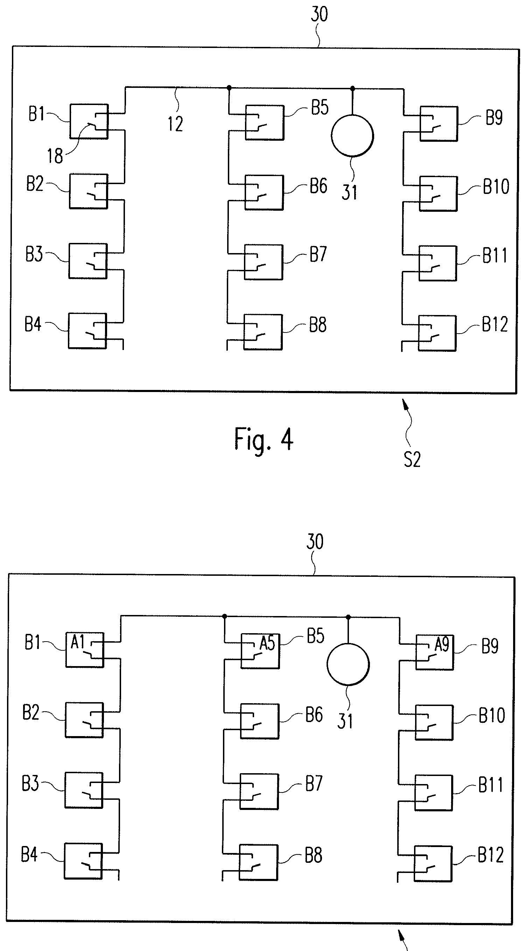

In Fig. 2 ist eine schematische Darstellung eines an einem Kommunikationsbus 22 angeschlossenen Betriebsgeräts 13 für Leuchtmittel 14 gemäß einem Ausführungsbeispiel der vorliegenden Erfindung gezeigt. Diese schematische Darstellung entspricht bspw. einem Teil eines größeren Kommunikationssystems 21 bzw. Gebäudetechnik-Systems, das den Kommunikationsbus 22 sowie eine Mehrzahl von damit verbundenen Komponenten wie beispielsweise eine zentrale Steuerkomponente 31 (in Fig. 4, 5 gezeigt) oder Betriebsgeräte 13 umfasst.

Der Kommunikationsbus 22 ist vorzugsweise ein Zwei-Draht Bus aufweisend zwei Leitungen in Form eines Nullleiters bzw. Neutralleiters 11 und eines Phasenleiters 12. Der Neutralleiter 11 und der Phasenleiter 12 verlaufen im Wesentlichen parallel zueinander gemäß einer Bus-Topologie, auch Linien- oder Strangtopologie genannt. Das heißt, dass alle Komponenten des Systems 21 direkt mit dem Bus 22 verbunden sind.

Ein Betriebsgerät 13 des Systems 21 weist eine interne Steuereinheit 20 auf, die dazu ausgelegt ist, ein oder mehrere Leuchtmittel 14 anzusteuern. Die Leichtmittel können bspw. LEDs, OLEDs oder Gasentladungslampen sein. Die Ansteuerung erfolgt vorzugsweise gemäß Befehlen wie bspw. Dimm-Befehlen, die dem Betriebsgerät adressiert sind und die beispielsweise ausgehend von der zentralen Steuerkomponente 31 über den Bus 22 vom Betriebsgerät 13 empfangen werden.

Im Unterschied zum Stand der Technik, wo eine an den zwei-Draht Bus 4 angeschlossene Komponente 1, 2, 3 über zwei Anschlüsse 9, 10 zum Anschließen an jeweils einen Draht des Busses verfügt, kann ein Betriebsgerät 13 gemäß der vorliegenden Erfindung vorzugweise insgesamt drei Ausgänge 15, 16, 17 zum Verbinden mit dem Bus 22 aufweisen.

Ein erster Ausgang 15 ist direkt mit dem Neutralleiter 11 vom Kommunikationsbus 22 verbindbar, wobei der Neutralleiter 11 komplett extern vom Betriebsgerät 13 verläuft. Wie in Fig. 2 gezeigt, ist der Ausgang 15 über einen Angriff 23 mit dem Neutralleiter 11 verbunden.

Der Phasenleiter 12 dagegen wird nicht abgegriffen. Er wird einerseits zu einem zweiten Ausgang 16 des Betriebsgeräts 13 geführt, und andererseits zu einem dritten Ausgang 17. Der Phasenleiter 12 ist in Serie mit der zweiten und mit dem dritten Ausgang 17 verbunden bzw. der Phasenleiter 12 wird durch den zweiten und den dritten Ausgang 16, 17 durchgeschleift. Innerhalb des Betriebsgeräts 13 sind der zweite und der dritte Ausgang 16, 17 über einen Schalter oder Öffner 18 verbunden. Der Schalter 18 wird vorzugsweise von der Steuereinheit 20 angesteuert, d.h. entweder geöffnet oder geschlossen. Die erste, zweite und dritte Ausgänge 15, 16, 17 bilden zusammen mit dem Schalter 18 eine Schnittstelle 19 des Betriebsgeräts.

Je nach Zustand des Schalters 18 ändert sich die (lokale) Topologie des Systems 21. Bei einem geschlossenen Schalter 18 ist der Phasenleiter 12 nicht unterbrochen bzw. nicht abgeschaltet. Die Ausgänge 16 und 17 weisen dasselbe elektrische Potential und entsprechen einem Abgriff. An diesem durch die Ausgänge 16, 17 gebildeten Abgriff kann das Betriebsgerät 13 die über den Bus 22 gesendeten Informationen ablesen, und selbst mittels eines Sendezweigs (nicht gezeigt) Informationen über den Bus 22 absenden. Die Spannung des Busses 22 und die darauf modulierten Informationen werden von einem Empfangszweig (nicht gezeigt) des Betriebsgeräts 13 gemessen bzw. abgelesen. Der Sendezweig und der Empfangszweig weisen entsprechend Mittel zur Modulation bzw. Demodulation der Bus-Spannung auf.

Bei dem anderen Zustand des Schalters 18, nämlich bei dem geöffneten Schalter 18, sind die zweite und dritte Ausgänge 16, 17 nicht mehr über eine Leitung verbunden und haben somit nicht mehr dasselbe elektrische Potential. Der Phasenleiter 12 ist nunmehr unterbrochen bzw. abgeschaltet. Der Sendezweig ist nunmehr mit dem zweiten Ausgang 16, und der Empfangszweig mit dem dritten Ausgang 17 verbunden, oder umgekehrt. Das heißt, dass das Betriebsgerät nicht mehr direkt mit allen an den Bus 22 angeschlossenen Komponenten bzw. Teilnehmer verbunden ist. Vielmehr kann das Betriebsgerät 13 nur noch von einem benachbarten Teilnehmer Daten senden, und von dem anderen benachbarten Teilnehmer Daten empfangen. Diese Änderung ist insbesondere in Fig. 4 deutlich zu merken, wo das Betriebsgerät B2 nur noch mit den benachbarten Betriebsgeräte B1 und B3 direkt verbunden ist.

Alternativ kann auch ein Bus vorgesehen sein, der mehr als zwei Drähte aufweist, wobei dann mindestens einer von den Drähten durch die Schnittstelle 19 durchgeschleift wird. In alternativen Ausführungsformen kann ein anderer Draht als der Phasenleiter 12 durch das Betriebsgerät 13 durchgeschleift werden.

Bei geöffnetem Schalter 18 kann der Phasenleiter 12 zwischen zwei benachbarten Betriebsgeräten B1, B2 unidirektional ausgestaltet sein, so dass das eine Betriebsgerät B1 dem anderen Gerät B2 entweder Daten senden kann, oder von ihm Daten empfangen kann. Gemäß alternativen Ausführungsformen der Erfindung kann der Phasenleiter 12 zwischen zwei benachbarten Betriebsgeräten B1, B2 bidirektional ausgestaltet sein. In so einem System können zwei durch den Phasenleiter direkt verbundene Teilnehmer B1, B2 sich gegenseitig Daten übersenden.

Erfindungsgemäß kann die Topologie eines Systems 21, das Teilnehmer aufweist, die über eine oben beschriebene Schnittstelle 19 verfügen, auf einfacher Weise geändert werden. Die Änderung kann dabei nur für ausgewählte Teilnehmer, fortschreitend von Teilnehmer zum benachbarten Teilnehmer oder gleichzeitig für alle Teilnehmer erfolgen. Ist der Schalter 18 von jedem Teilnehmer geschlossen, so ergibt sich eine Bus-Topologie, wo alle Teilnehmer direkt mit den anderen verbunden sind, und alle über den Bus 22 gesendeten Nachrichten empfangen.

Sind im Kommunikationssystem 21 die Schalter 18 alle geöffnet, übernimmt das System 21 eine Ring-Topologie, in welcher ein Teilnehmer die Nachricht stets an den nächsten Teilnehmer weiterleitet, bis die Nachricht den gewünschten Teilnehmer erreicht hat. Die Teilnehmer bzw. Betriebsgeräte sind in Serie miteinander verbunden, was auch mit dem Begriff "Daisy Chain" bezeichnet werden kann.

Das Ansteuern des Schalters 18 eines Teilnehmers kann via ein entsprechendes über den Bus 22 gesendetes Befehl erfolgen. Das Senden dieses Befehls bzw. dieser Nachricht kann vorzugsweise von einer zentralen Steuerkomponente 31 (in Fig. 4, 5 gezeigt) übernommen werden.

Erfindungsgemäß wird nunmehr zwischen diesen zwei Topologien umgeschaltet, um den Betrieb und insbesondere die Inbetriebnahme beispielsweise eines Beleuchtungssystems zu vereinfachen.

Die bei geöffnetem Schalter 18 verursachte Ring-Topologie mit ihrer sequenziellen Verdrahtung weist nämlich den Vorteil auf, dass die örtliche Lokalisierung einfach zu ermitteln ist, da jeder Teilnehmer seine unmittelbaren Nachbarn kennt. Allerdings weist diese Topologie auch den Nachteil auf, dass der Ausfall eines einzelnen Teilnehmers die Kette durchbricht, und somit im schlimmsten Fall die gesamte Anlage lahmlegen kann.

Zusammenfassend ist die Bus-Topologie vorteilhaft für den Betrieb einer Lichtsteueranlage wegen Verdrahtung und Ausfallsicherheit. Dagegen ist wegen der einfachen Adressierung bzw. örtlichen Lokalisierung die Ring-Topologie vorteilhaft für die Inbetriebnahme und im Wartungsfall einer Lichtsteueranlage.

Im Zusammenhang mit Fig. 3 bis 8 wird nunmehr eine erfindungsgemäße Inbetriebnahme eines Lichtsteuersystems bzw. Beleuchtungssystems 30 mit Busteilnehmers B1-B12 erläutert. Ein Busteilnehmer B1-B12 kann beispielsweise wie im vorigen Ausführungsbeispiel ein Betriebsgerät für Leuchtmittel oder ein elektronisches Vorschaltgerät für Gasentladungslampen sein. Eine erfindungsgemäße Inbetriebnahme des Lichtsteuersystems 30 kann folgende Schritte aufweisen.

(S1) Zu Beginn, d.h. nach der Installation der Busteilnehmer B1-B12, sind die Schalter 18 von allen Busteilnehmern B1-B12 vorzugsweise so geschaltet, so dass das Lichtsteuersystem 30 eine Bus-Topologie aufweist.

Fig. 3 zeigt das Lichtsteuersystem 30 nach der Installation der Busteilnehmer B1-B12. Es wird gezeigt eine typische Installation in einem Lichtsteuersystem 30. Diese weist zum Beispiel drei Leuchtenreihen 32, 33, 34 auf, welche sternförmig verbunden sind. In Fig. 3 sind die Busteilnehmer B1-B12 vereinfacht dargestellt, ebenso sind die Busleitungen vereinfacht durch eine einzige Leitung 12 dargestellt. Alle Schalter 18 sind geschlossen, d.h. die Steuerleitungen sind quasi nur durchgeschleift, wodurch jeder Busteilnehmer B1-B12 alle Nachrichten empfangen kann.

(S2) Zur Inbetriebnahme werden die Busteilnehmer B1-B12, i.e. beispielsweise die Betriebsgeräte, zunächst mit einer zentralen Steuerkomponente 31 adressiert. Im Adressierungsmodus öffnen alle Busteilnehmer B1-B12 ihre Schalter 18. Dadurch weist das Lichtsteuersystem 30, wie auf Fig. 4 ersichtlich, nunmehr eine (offene) Ring-Topologie auf. Die Ring-Topologie ist also nicht der Zustand für den normalen Betriebszustand, sondern wird vorzugsweise nur für Betriebszustand ausserhalb des Leuchtbetriebs, bspw. für die Adressvergabephase ausgehend von einem Befehl der zentralen Steuerkomponente ausgelöst. Auf einen derartigen Befehl hin stellen alle Teilnehmer (im wesentlichen gleichzeitig) auf Ringtopologie um. Die Umstellung auf Bustopologie erfolgt im Adressvergabemodus dann vorzugsweise sukzessive, wie im später im Detail erläutert werden wird.

Bei diesem Schritt wird auf die Ring-Topologie umgeschaltet. Die zentrale Steuerkomponente 31 aktiviert nun den Adressierungsmodus. Das Umschalten auf die Ring-Topologie kann automatisch mit dem aktivieren des Adressierungsmodus erfolgen, oder auch separat durch ein gesondertes Kommando. Alle Busteilnehmer B1-B12 öffnen nun ihre Schalter. Fig. 4 zeigt das Lichtsteuersystem im Adressierungsmodus nach dem Umschalten auf die Ring-Topologie. Dieser Verfahrensschritt (S2) ist optional, da gemäß alternativen Ausführungsformen der Erfindung die Schalter 18 nach der Installation bereits in einem geöffneten Zustand sich befinden können.

(S3) In der vorherrschenden offenen Ring-Topologie gemäß Fig. 5 sind drei Busteilnehmer B1, B5, B9 direkt über eine Leitung mit der zentralen Steuerkomponente 31 verbunden. Grundsätzlich sind in diesem Verfahrensschritt gegenüber der Anzahl der Betriebsgeräte des Systems 30 nur wenige Betriebsgeräte mit der zentralen Steuerkomponente 31 unmittelbar und direkt verbunden. Die an die zentrale Steuerkomponente 31 angeschlossenen Teilnehmer B1, B5, B9 erhalten dann von dieser eine Adresse A1, A5, A9 zugewiesen.

Dieser Verfahrensschritt besteht darin, die ersten Teilnehmer zu adressieren. Wie in Fig. 5 ersichtlich, sind von zwölf Teilnehmern gerade noch drei Teilnehmer mit der zentralen Steuerkomponente 31 verbunden. Es ist also keine reine Ring-Topologie gegeben, sondern vielmehr sind drei Ringe sternförmig verbunden. Durch eine andere Verdrahtung bei der Installation als die dargestellte typische, könnte nach dem Umschalten auf Ringtopologie auch nur ein einzelner Ring gegeben sein. Wodurch das Adressieren des ersten Teilnehmers noch deutlich vereinfacht wäre.

Im Beispiel der Fig. 5 müssen jedoch drei Teilnehmer adressiert werden. Dies erfolgt nun durch bekannte Methoden, wie z.B. Randomaddress-Verfahren. Die Busteilnehmer B1, B5, B9 bekommen im Beispiel der Fig. 5 die Adressen A1, A5 und A9. Fig. 5 zeigt das Adressieren der ersten Teilnehmer.

(S4) Adressieren der verbleibenden Teilnehmer. Danach wird jeweils ein einzelnes bereits adressiertes Busteilnehmer (per Kommando an seine bereits zugewiesene Adresse) dazu veranlasst, seinen Schalter 18 zu schließen (S40), wodurch ein weiterer, noch nicht adressierter Busteilnehmer mit der zentralen Steuerkomponente 31 verbunden wird. Nun erhält dieser Busteilnehmer seine Adresse usw.

Der Vorteil des erfindungsgemäßen Verfahrens gegenüber einer Inbetriebnahme der Lichtsteueranlage unter Bus-Topologie besteht darin, dass für sämtliche verbliebenen Teilnehmer die Position im Gebäude oder im Raum bereits bekannt ist. Somit können alle verbliebenen Teilnehmer vollautomatisch adressiert und auch konfiguriert werden.

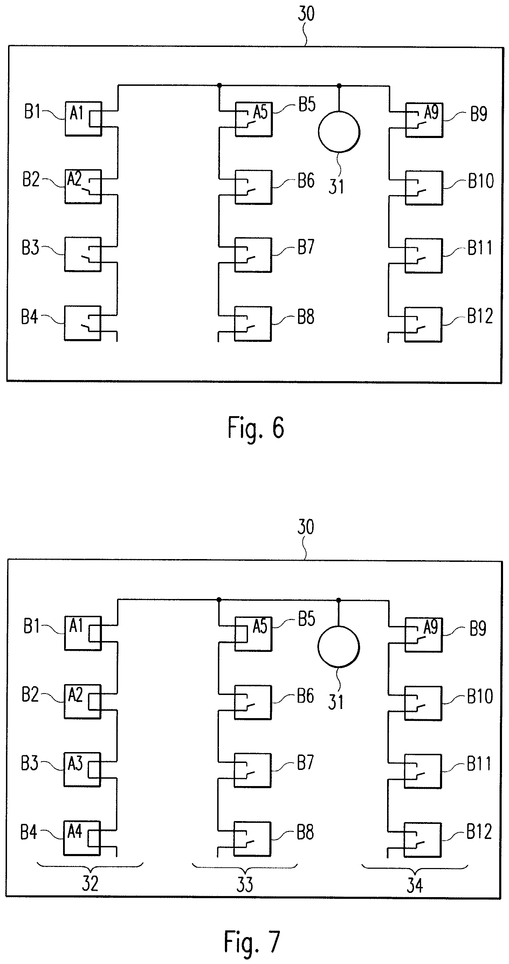

(S41) Fig. 6 zeigt das Adressieren des ersten verbliebenen Teilnehmers. Die zentrale Steuerkomponente 31 veranlasst nun den ersten der adressierten Teilnehmer B1 dazu, seinen Schalter 18 zu schließen. Dies kann entweder durch Beenden des Adressierungsmodus für diesen Teilnehmer B1 erfolgen, oder auch separat durch ein gesondertes Kommando. Dadurch wird einzig der unmittelbar folgende Teilnehmer B2 mit der zentralen Steuerkomponente 31 verbunden, und die zentrale Steuerkomponente 31 kann diesem Teilnehmer B2 die geplante Adresse A2 zuweisen.

(S42) Nun wird Teilnehmer B2 dazu veranlasst, seinen Schalter 18 zu schließen, so dass dem nachfolgenden Teilnehmer B3 seine Adresse A3 zugewiesen bekommen kann. Anschließend wird gleichermaßen der Teilnehmer B4.

(S43) Nun ist die erste Leuchtenreihe 32 adressiert. Die Adressierung wird in der zweiten Leuchtenreihe 33 bei Teilnehmer B5 fortgesetzt, dessen Nachfolger B6 die Adresse A6 erhält. Fig. 7 zeigt wie mehrere verbliebene Teilnehmer adressiert sind.

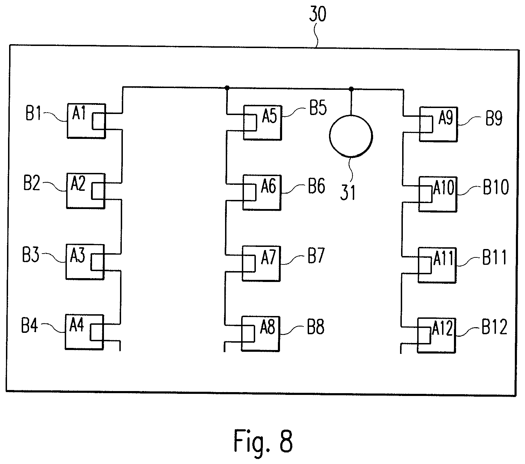

(S44) Die beschriebenen Schritte werden solange wiederholt, bis alle Teilnehmer adressiert sind. Fig. 8 zeigt wie alle Teilnehmer adressiert sind.

(S5) Am Ende der Adressierung haben alle Busteilnehmer ihre Adresse, und die Bus-Topologie mit allen geschlossen Schaltern 18 ist wieder hergestellt.

Im Folgenden wird auf den Wartungsfall eingegangen. Ein weiterer Vorteil der vorliegenden Erfindung ist nämlich im Wartungsfall gegeben.

Ein großes Problem beim Austausch von defekten Geräten ist in der Tat, dass die Adressierung und Konfiguration der Austauschgeräte manuell erfolgen muss, sobald mehr als ein Gerät ausgetauscht werden muss. Ein Austauschgerät muss dieselben Einstellungen wie das defekte Gerät aufweisen, damit die Anlage wieder problemlos funktioniert. Dies bedeutet in der Regel, dass ein Servicetechniker vor Ort sein muss.

Erfindungsgemäß kann ein defektes Gerät oder auch mehrere Geräte vollautomatisch in die Anlagenkonfiguration eingebunden werden. Dazu wird wieder auf die Ring-Topologie umgestellt (S2), sehe Fig. 4. Dann werden schrittweise die Schalter 18 aller Teilnehmer geschlossen, bis ein neues unadressiertes Gerät gefunden wird. Da in der Ring-Topologie die Position des gefundenen Gerätes bekannt ist, ist es einfach die ursprünglichen Einstellungen (Adresse, Parametrierung) wieder einzuspielen. Somit können also mehrere Austauschgeräte vollautomatisch in die bestehende Anlagenkonfiguration integriert werden.

### Bezugszeichenliste

- 1-3: Betriebsgerät (Stand der Technik)
- 4: Bus (Stand der Technik)
- 5: ringförmige Struktur (Stand der Technik)
- 6: Steuergerät (Stand der Technik)
- 7: Empfänger (Stand der Technik)
- 8: Sender (Stand der Technik)
- 9, 10: Anschlüsse zum Anschliessen an den Bus (Stand der Technik)
- 11: Neutralleiter vom Kommunikationsbus
- 12: Phasenleiter vom Kommunikationsbus
- 13: Betriebsgerät
- 14: Leuchtmittel
- 15: erster Ausgang
- 16: zweiter Ausgang
- 17: dritter Ausgang
- 18: Schalter
- 19: Schnittstelle
- 20: Steuereinheit
- 21: Kommunikationssystem
- 22: Kommunikationsbus
- 23: Angriff
- 30: Lichtsteuersystem bzw. Beleuchtungssystem
- 31: zentrale Steuerkomponente
- 32-34: Leuchtenreihe

## Patentansprüche

1. Bus-Beleuchtungssystem, aufweisend mehrere Gebäudetechnik-Bus-Teilnehmer (B1-B12) in Form von busfähigen Gebäudetechnik-Betriebsgeräten (13) für Leuchtmittel (14), wobei:
- wenigstens ein busfähiges Gebäudetechnik-Betriebsgerät (13) für Leuchtmittel (14) eine Schnittstelle (19) aufweist; **dadurch gekennzeichnet, dass**
- die Schnittstelle (19) einen ersten Anschluss (16), einen zweiten Anschluss (17), und einen zwischen den ersten Anschluss (16) und den zweiten Anschluss (17) eingeschalteten Schalter (18) aufweist;
- die Schnittstelle (19) dazu ausgelegt ist, durch Schalten des Schalters (18) selektiv eine Bus-Verdrahtung (12) zur Schaffung einer Ringtopologie zu unterbrechen oder zur Schaffung einer Bustopologie durchgehend durchzuschleifen;
- die Gebäudetechnik-Bus-Teilnehmer (B1-B12) untereinander und/oder mit einer Zentraleinheit (31) über eine Busleitung verbunden sind;
- die Busleitung die Bus-Verdrahtung (12) umfasst;
- die Topologie der Busleitung umschaltbar ist, so dass die Topologie der Busleitung wahlweise die Ringtopologie oder die Bustopologie ist; und
- das Bus-Beleuchtungssystem dazu eingerichtet ist, die folgenden Schritte durchzuführen:
a.) Anordnen des Bus-Beleuchtungssystems in einer Ringtopologie durch selektives Unterbrechen der Bus-Verdrahtung (12) in der Schnittstelle (19) durch ein erstes Schalten des Schalters (18),
b.) Vergabe einer Adresse (A1) an einen ersten Bus-Teilnehmer (B1),
c.) Weiterschleifen der Busleitung durch den ersten Bus-Teilnehmer (B1) durch selektives durchgehendes Durchschleifen der Bus-Verdrahtung (12) in der Schnittstelle (19) durch ein zweites Schalten des Schalters (18),
d.) Vergabe einer Adresse (A2) an den auf den ersten Bus-Teilnehmer (B1) folgenden Bus-Teilnehmer (B2).

2. Bus-Beleuchtungssystem gemäß Anspruch 1, wobei das Beleuchtungssystem die Zentraleinheit (31) aufweist, die dazu ausgelegt ist, über die Bus-Verdrahtung (12) und eine weitere Verdrahtung (11) den Bus-Teilnehmer (B1-B12) Daten, insbesondere Befehle zum Ansteuern des Schalters (18), zu übersenden.

3. Bus-Beleuchtungssystem gemäß Anspruch 2, wobei die Schnittstelle (19) einen dritten Anschluss (15) zum Verbinden mit der weiteren Verdrahtung (11) des Bus-Beleuchtungssystems über einen Abgriff (23) aufweist.

4. Bus-Beleuchtungssystem gemäß einem der vorigen Ansprüche, wobei die Schnittstelle (19) einen Sendezweig und einen Empfangszweig zum Senden bzw. Empfangen von Daten über die Bus-Verdrahtung (12) und/oder die weitere Verdrahtung (11) aufweist.

5. Bus-Beleuchtungssystem gemäß Anspruch 4, wobei bei geöffnetem Schalter (18) der Sendezweig und der Empfangszweig jeweils entweder nur mit dem ersten Anschluss (16) oder mit dem zweiten Anschluss (17) verbunden sind.

6. Bus-Beleuchtungssystem gemäß einem der Ansprüche 2 bis 5, wobei das wenigstens ein busfähiges Gebäudetechnik-Betriebsgerät (13) für Leuchtmittel (14) ferner eine Steuereinheit (20) zum Steuern bzw. Öffnen 30 oder Schließen des Schalters (18) aufweist.

7. Bus-Beleuchtungssystem gemäß Anspruch 6, wobei die Steuereinheit (20) dazu ausgelegt ist, über die Bus-Verdrahtung oder Bus-Verdrahtungen (11, 12) einen Befehl zum Öffnen oder Schließen des Schalters (18) zu erhalten, und den Schalter (18) entsprechend anzusteuern.

8. Verfahren zum Betrieb eines Bus-Beleuchtungssystems (21, 30) mit mehreren Gebäudetechnik-Bus-Teilnehmern (B1-B12) in Form von busfähigen Gebäudetechnik-Betriebsgeräten (13) für Leuchtmittel (14), wobei:
- wenigstens ein busfähiges Gebäudetechnik-Betriebsgerät (13) für Leuchtmittel (14) eine Schnittstelle (19) aufweist;
**dadurch gekennzeichnet, dass**
- die Schnittstelle (19) einen ersten Anschluss (16), einen zweiten Anschluss (17), und einen zwischen den ersten Anschluss (16) und den zweiten Anschluss (17) eingeschalteten Schalter (18) aufweist;
- die Schnittstelle (19) dazu ausgelegt ist, durch Schalten des Schalters (18) selektiv eine Bus-Verdrahtung (12) zur Schaffung einer Ringtopologie zu unterbrechen oder zur Schaffung einer Bustopologie durchgehend durchzuschleifen;
- die Gebäudetechnik-Bus-Teilnehmer (B1-B12) untereinander und/ oder mit einer Zentraleinheit (31) über eine Busleitung verbunden sind;
- die Busleitung die Bus-Verdrahtung (12) umfasst;
- die Topologie der Busleitung umschaltbar ist, so dass die Topologie der Busleitung wahlweise die Ringtopologie oder die Bustopologie ist; und
- zur Vergabe einer Adresse (A1-A12) an die Bus-Teilnehmer (B1-B12) die folgenden Schritte durchgeführt werden:
a.) Anordnen des Bus-Beleuchtungssystems in der Ringtopologie durch selektives Unterbrechen der Bus-Verdrahtung (12) in der Schnittstelle (19),
b.) Vergabe einer Adresse (A1) an einen ersten Bus-Teilnehmer (B1),
c.) Weiterschleifen der Busleitung durch den ersten Bus-Teilnehmer (B1) durch selektives durchgehendes Durchschleifen der Bus-Verdrahtung (12) in der Schnittstelle (19),
d.) Vergabe einer Adresse (A2) an den auf den ersten Bus-Teilnehmer (B1) folgenden Bus-Teilnehmer (B2).

9. Verfahren nach Anspruch 8, bei dem die Schritte b.) bis d.) mit fortschreitenden Bus-Teilnehmer (B3-B12) wiederholt ausgeführt werden, bis ein Abbruchkriterium erreicht ist, insbesondere bis durch das fortschreitende Durchschleifen die Bus-Verdrahtung in eine Bustopologie überführt ist.

10. Verfahren nach Anspruch 9, wobei nach Abschluss der Adressvergabe, d.h. nach Erreichen des Abbruchkriteriums, das Bus-Beleuchtungssystem mit der als Bustopologie konfigurierten Busleitung betrieben wird.

## Claims

1. Bus lighting system, having several building technology bus users (B1-B12) in form of bus-compatible building technology operating devices (13) for lighting means (14), wherein:
- at least one bus-compatible building technology operating device (13) for lighting means (14) has an interface (19);
**characterized in that**
- the interface (19) has a first connection (16), a second connection (17), and a switch (18) inserted between the first connection (16) and the second connection (17);
- the interface (19) is designed to selectively, by switching the switch (18), interrupt a bus wiring (12) for creating a ring topology or to continuously loop through for creating a bus topology;
- the building technology bus users (B1-B12) are connected with one another and/or with a central unit (31) via a bus line;
- the bus line comprises the bus wiring (12);
- the topology of the bus line is switchable so that the topology of the bus line is optionally the ring topology or the bus topology; and
- the bus lighting system is equipped to carry out the following steps:
a.) Arranging the bus lighting system in a ring topology by selectively interrupting the bus wiring (12) in the interface (19) by a first switching of the switch (18),
b.) Assigning an address (A1) to a first bus user (B1),
c.) Looping the bus line through the first bus user (B1) by selective continuous looping through of the bus wiring (12) in the interface (19) by a second switching of the switch (18),
d.) Assigning an address (A2) to the bus user (B2) following the first bus user (B1).

2. Bus lighting system according to claim 1, wherein the lighting system has the central unit (31) designed to transmit data, in particular commands for actuating the switch (18), to the bus user (B1-B12) via the bus wiring (12) and a further wiring (11).

3. Bus lighting system according to claim 2, wherein the interface (19) has a third connection (15) for connecting with the further wiring (11) of the bus lighting system via a tap (23).

4. Bus lighting system according to one of the preceding claims, wherein the interface (19) has a transmitting branch and a receiving branch for sending or receiving data via the bus wiring (12) and/or the further wiring (11).

5. Bus lighting system according to claim 4, wherein, when the switch (18) is open, the transmitting branch and the receiving branch are respectively either connected only with the first connection (16) or with the second connection (17).

6. Bus lighting system according to one of the claims 2 to 5, wherein the at least one bus-compatible building technology operating device (13) for lighting means (14) furthermore has a control unit (20) for controlling/opening or closing the switch (18).

7. Bus lighting system according to claim 6, wherein the control unit (20) is designed to obtain via the bus wiring or bus wirings (11, 12) a command for opening or closing the switch (18) and to actuate the switch (18) accordingly.

8. Method for operating a bus lighting system (21, 30) with several building technology bus users (B1-B12) in form of bus-compatible building technology operating devices (13) for lighting means (14), wherein:
- at least one bus-compatible building technology operating device (13) for lighting means (14) has an interface (19);
**characterized in that**
- the interface (19) has a first connection (16), a second connection (17), and a switch (18) inserted between the first connection (16) and the second connection (17);
- the interface (19) is designed to selectively, by switching the switch (18), interrupt a bus wiring (12) for creating a ring topology or to continuously loop through for creating a bus topology;
- the building technology bus users (B1-B12) are connected with one another and/or with a central unit (31) via a bus line;
- the bus line comprises the bus wiring (12);
- the topology of the bus line is switchable so that the topology of the bus line is optionally the ring topology or the bus topology; and
- the following steps are carried out for assigning an address (A1-A12) to the bus users (B1-B12):
a.) Arranging the bus lighting system in the ring topology by selective interrupting of the bus wiring (12) in the interface (19),
b.) Assigning an address (A1) to a first bus user (B1),
c.) Looping the bus line through the first bus user (B1) by selective continuous looping through of the bus wiring (12) in the interface (19);
d.) Assigning an address (A2) to the bus user (B2) following the first bus user (B1).

9. Method according to claim 8, where the steps b.) to d.) are repeatedly carried out with advancing bus user (B3-B12) until a termination criterion is reached, in particular until the bus wiring is transferred into a bus topology by the continuous looping through.

10. Method according to claim 9, wherein the bus lighting system is operated with the bus line configured as bus topology after completion of the assigning of addresses, i.e. after reaching the termination criterion.

## Revendications

1. Système d'éclairage de bus, comportant plusieurs utilisateurs de bus (B1-B12) de la technologie du bâtiment sous forme des dispositifs opérationnels (13) de la technologie du bâtiment compatibles avec bus pour des moyens d'éclairage (14), dans lequel :
- au moins un dispositif opérationnel (13) de la technologie du bâtiment compatible avec bus, pour des moyens d'éclairage (14), comporte une interface (19) ; **caractérisé en ce que**
- l'interface (19) comporte une première connexion (16), une seconde connexion (17), et un interrupteur (18) inséré entre la première connexion (16) et la seconde connexion (17) ;
- l'interface (19) est conçue pour de façon sélective, en commutant l'interrupteur (18), interrompre un câblage en bus (12) pour créer une topologie en anneau ou pour permettre un bouclage sans interruption pour créer une topologie en bus ;
- les utilisateurs de bus de la technologie du bâtiment (B1-B12) sont connectés les uns aux autres et/ou à une unité centrale (31) via une ligne de bus ;
- la ligne de bus comprend le câblage en bus (12) ;
- la topologie de la ligne de bus peut être commutée de manière à ce que la topologie de la ligne de bus soit, au choix, la topologie en anneau ou la topologie en bus ; et
- le système d'éclairage de bus est équipé pour effectuer les étapes suivantes :
a.) Disposer le système d'éclairage de bus dans une topologie en anneau en interrompant de façon sélective le câblage en bus (12) dans l'interface (19) par une première commutation de l'interrupteur (18),
b.) Attribuer une adresse (A1) à un premier utilisateur de bus (B1),
c.) Permettre un bouclage de la ligne de bus à travers le premier utilisateur de bus (B1) en permettant, de façon sélective, un bouclage sans interruption du câblage en bus (12) dans l'interface (19) par une seconde commutation de l'interrupteur (18),
d.) Attribuer une adresse (A2) à l'utilisateur de bus (B2) à la suite du premier utilisateur de bus (B1).

2. Système d'éclairage de bus selon la revendication 1, dans lequel le système d'éclairage comporte une unité centrale (31) conçue pour transmettre des données, en particulier des commandes pour actionner l'interrupteur (18), à l'utilisateur de bus (B1-B12) via le câblage en bus (12) et un câblage supplémentaire (11).

3. Système d'éclairage de bus selon la revendication 2, dans lequel l'interface (19) comporte une troisième connexion (15) pour se connecter au câblage supplémentaire (11) du système d'éclairage de bus via une prise (23).

4. Système d'éclairage de bus selon l'une des revendications précédentes, dans lequel l'interface (19) comporte une branche de transmission et une branche de réception pour envoyer ou recevoir des données via le câblage en bus (12) et/ou le câblage supplémentaire (11).

5. Système d'éclairage de bus selon la revendication 4, dans lequel, lorsque l'interrupteur (18) est ouvert, la branche de transmission et la branche de réception sont respectivement connectées uniquement à la première connexion (16) ou à la seconde connexion (17).

6. Système d'éclairage de bus selon l'une des revendications de 2 à 5, dans lequel l'au moins un dispositif opérationnel (13) de la technologie du bâtiment compatible avec bus pour moyens d'éclairage (14) comporte de plus une unité de commande (20) pour commander/ouvrir ou fermer l'interrupteur (18).

7. Système d'éclairage de bus selon la revendication 6, dans lequel l'unité de commande (20) est conçue pour obtenir via le câblage en bus ou des câblages en bus (11, 12) une commande destinée à ouvrir ou fermer l'interrupteur (18) et à actionner l'interrupteur (18) en conséquence.

8. Procédé d'utilisation d'un système d'éclairage de bus (21, 30) comportant plusieurs utilisateurs de bus (B1-B12) de la technologie du bâtiment sous forme des dispositifs opérationnels (13) de la technologie du bâtiment compatibles avec bus pour des moyens d'éclairage (14), dans lequel :
- au moins un dispositif opérationnel (13) de la technologie du bâtiment compatible avec bus, pour des moyens d'éclairage (14), comporte une interface (19) ; **caractérisé en ce que**
- l'interface (19) comporte une première connexion (16), une seconde connexion (17), et un interrupteur (18) inséré entre la première connexion (16) et la seconde connexion (17) ;
- l'interface (19) est conçue pour de façon sélective, en commutant l'interrupteur (18), interrompre un câblage en bus (12) pour créer une topologie en anneau ou pour permettre un bouclage sans interruption pour créer une topologie en bus ;
- les utilisateurs de bus de la technologie du bâtiment (B1-B12) sont connectés les uns aux autres et/ou à une unité centrale (31) via une ligne de bus ;
- la ligne de bus comprend le câblage en bus (12) ;
- la topologie de la ligne de bus peut être commutée de manière à ce que la topologie de la ligne de bus soit, au choix, la topologie en anneau ou la topologie en bus ; et
- les étapes suivantes sont effectuées dans le cadre de l'attribution d'une adresse (A1-A12) aux utilisateurs de bus (B1-B12) :
a.) Disposer le système d'éclairage de bus dans la topologie en anneau en interrompant de façon sélective le câblage en bus (12) dans l'interface (19),
b.) Attribuer une adresse (A1) à un premier utilisateur de bus (B1),
c.) Permettre le bouclage de la ligne de bus par l'intermédiaire du premier utilisateur de bus (B1) en permettant, de façon sélective, le bouclage sans interruption du câblage en bus (12) dans l'interface (19) ;
d.) Attribuer une adresse (A2) à l'utilisateur de bus (B2) à la suite du premier utilisateur de bus (B1).

9. Procédé selon la revendication 8, dans lequel les étapes b.) à d.) sont effectuées à plusieurs reprises avec un utilisateur de bus avancé (B3-B12) jusqu'à ce qu'une condition de fin soit atteinte, en particulier jusqu'à ce que le câblage en bus soit transféré dans une topologie en bus par le bouclage sans interruption.

10. Procédé selon la revendication 9, dans lequel le système d'éclairage de bus est utilisé avec la ligne de bus configurée comme une topologie de bus après l'achèvement de l'attribution des adresses, c'est-à-dire après avoir atteint la condition de fin.
